# EUROPÄISCHE PATENTANMELDUNG

(11) **EP 1 935 474 A1**
(43) Veröffentlichungstag der Anmeldung: **25.06.2008**
(21) Anmeldenummer: 07022947.1
(22) Anmeldetag: 27.11.2007
(51) Int. Cl.: B01D 46/30, B01D 46/00, B01D 53/84

(54) **Vorrichtung zum Filtern von belasteten Gasen**

(30) Priorität: 28.11.2006 DE 102006018160
(71) Anmelder: Störk-Küfers, Inh. Hans Störk e.K., 78576 Emmingen/Liptingen (DE)
(72) Erfinder: Störk, Hans, 78576 Emmingen-Liptingen (DE)
(74) Vertreter: Weiss, Peter

(57) **Zusammenfassung**

Bei einer Vorrichtung zum Filtern von belasteten Gasen, insbesondere von Abluft, mittels einem Filtermaterial, insbesondere Biofiltermaterial, welches sich in einem Raum (1) mit einem Boden (3) befindet und durch welches das Gas führbar ist, wobei auf den Boden (3) Seitenwandpaneele (4) aufgesetzt und miteinander verbunden werden.

## Beschreibung

Die Erfindung betrifft eine Vorrichtung zum Filtern von belasteten Gasen, insbesondere von Abluft, mittels einem Filtermaterial, insbesondere Biofiltermaterial, welches sich in einem Raum mit einem Boden befindet und durch welches das Gas führbar ist.

### Stand der Technik

Bei den heutzutage gestiegenen Anforderungen an den Umweltschutz ist es unabdingbar, dass belastete, insbesondere kontaminierte Gase, und hier insbesondere Abluft, gereinigt werden. In Kanalsystemen, wie beispielsweise Abwasserkanälen, findet dies schon seit geraumer Zeit statt. Nur beispielsweise soll hier auf die DE 198 05 604 C1 verwiesen werden, die einen Biofilter zum Einbau in Abflusssysteme beschreibt. Dieser Biofilter weist einen Auffangtrichter und ein anschliessendes Filtergehäuse auf, wobei sich in dem Filtergehäuse ein entfernbares Filtermaterial befindet. Die Abluft aus beispielsweise einem kommunalen Abwassernetz durchzieht das Filtermaterial, wobei dort vorhandene Mikroben und Bakterien die übelriechenden Bestandteile aus der Luft binden.

Aus der DE 101 57 321 A1 ist des Weiteren ein Verfahren zum Reinigen von Abluft mit einem Filter in einer grösseren Anlage bekannt, wobei die Abluft in einer Abluftleitung zu dem Filter geführt wird. In diese Abluftleitung wird die Abluft vor dem Biofilter mit einem Flüssigkeitsnebel vermischt.

Aus der DE 102 35 839 A1 ist ein Verfahren zum Reinigen von Abluft mit einem Biofilter bekannt, dem ein Reaktor vorgeschaltet ist, wobei in diesem Reaktor schädliche Bestandteile der Luft für die Bakterien und Mikroben des Filtermaterials entnommen werden.

### Aufgabe

Aufgabe der vorliegenden Erfindung ist es, eine Vorrichtung der oben genannten Art zu schaffen, welche auch zum Reinigen von grösseren Mengen von belasteten Gasen an beliebigen Standorten in der Lage ist. Gleichzeitig soll die Vorrichtung leicht auf- und ggf. auch wieder abzubauen sein sowie eine unkomplizierte Reinigung von Gasen ermöglichen.

### Lösung der Aufgabe

zur Lösung der Aufgabe führt, dass auf den Boden Seitenwandpaneele aufgesetzt und miteinander verbunden sind.

Diese Seitenwandpaneele bilden zusammen mit dem Boden und einer später beschriebenen Plane einen relativ geschlossenen Raum, wobei das gesamte System als Baukastensystem aufgebaut ist und deshalb leicht zu transportieren, leicht aufzubauen und leicht zu demontieren ist. Vor allem von der Statik her hat es sich als sehr günstig erwiesen.

Die Seitenwandpaneele können aus einem beliebigen Material bestehen. Metalle, wie beispielsweise Stahl, haben zwar Vorteile betreffend die Hygiene und die Festigkeit, sind jedoch teuer und schwer. Zu bevorzugen sind deshalb Paneele aus Kunststoff. Beispielsweise könnte hier Polyethylen (PE) verwendet werden, das jedoch einen hohen Wärmeausdehnungskoeffizienten aufweist. Das bedeutet, dass auf der Sonnenseite die Ausdehnung der Paneele wesentlich höher ist als auf der der Sonne abgewandten Seite. Hierdurch ist die Gefahr der Entstehung von Spalten zwischen den Seitenwandpaneelen sehr hoch. Um dies zu vermeiden wird bevorzugt ein handelsübliches Bauteil eingesetzt, welches einen Kern aus Hartschaum aufweist und - bevorzugt beidseits - mit einer Metallhaut belegt ist.

Auch für die Verbindung von zwei benachbarten Seitenwandpaneelen gibt es viele Möglichkeiten, die von der vorliegenden Erfindung umfasst sein sollen. In einem einfachen Ausführungsbeispiel stossen zwei benachbarte Seitenwandpaneele mit ihren Seitenkanten aneinander und werden beispielsweise durch ein doppelt wirkendes Klebeband miteinander verbunden. Die Verbindung kann auch durch Verschweissen geschehen, oder aber die entstandenen Fugen zwischen zwei Seitenwandpaneelen werden durch eine Fugenmasse, beispielsweise durch Silikon verschlossen.

Es sind aber auch eine Reihe von mechanischen Verbindungsmöglichkeiten denkbar, wie beispielsweise das Überlappen von Seitenwandbereichen oder bekannte Nut-/Federverbindungen.

Die Ausgestaltung des Bodens ist im Rahmen der vorliegenden Erfindung von untergeordneter Bedeutung. Denkbar ist jede feste Bodenstruktur, beispielsweise eine Betonplatte oder auch eine Bitumenplatte.

Zur Abstützung der Seitenwandpaneele sind bevorzugt Stützen vorgesehen. Diese befinden sich ausserhalb des Raumes, sodass sie den von innen her auf die Seitenwandpaneele einwirkenden Druck nach aussen abfangen. Diese Stützen können dabei beliebig, beispielsweise I- oder U-förmig, ausgestaltet sein, bevorzugt sind sie aus Stahl und mit einem geeigneten Querschnitt geformt, der von der Statik her günstig ist. Sie werden mit dem Boden verbunden und können noch zusätzlich durch nach aussen gerichtete Stützstreben festgelegt werden.

Eine zusätzliche Halterung der Seitenwandpaneele geschieht durch obere und/oder untere Halteprofile. Die oberen Halteprofile sollten auf jeden Fall vorgesehen werden, die untere Halteprofile sind nicht unbedingt notwendig. Hier könnten die Seitenwandpaneele auch direkt auf dem Boden aufstehen und durch eine entsprechende Fugenmasse gegenüber dem Boden abgedichtet sein.

Die Form der Halteprofil ist ebenfalls zweitrangig. Es könnten beispielsweise einfache L-förmige Haltewinkel sein. Bevorzugt werden allerdings U-förmige Halteprofile, die quasi eine Aufnahmerinne für die Seitenwandpaneele ausbilden.

Bevorzugt ist das obere Halteprofil mit den Stützen verbunden. Hierzu ist beispielsweise ein Haltewinkel vorgesehen, der an einem Deckprofil festliegt, das wiederum auf die Stütze aufgesetzt ist. Auch dieses ist aber nur ein Ausführungsbeispiel. Wird ein Deckprofil verwendet, so sollte zumindest dessen Aussenkante abgerundet sein, damit darüber die oben erwähnte Plane gelegt werden kann. Dies gewährleistet, dass die Plane nicht verletzt wird. Gleiches gilt für ein zu verwendendes Winkelprofil, an welchem der Haltewinkel befestigt sein kann. Die Verbindung des Halteprofil mit den Stützen ist auf vielfache Art und Weise möglich, welche von der vorliegenden Erfindung umfasst sein sollen.

Die Festlegung der Plane geschieht im übrigen über entsprechende Spanngurte, welche die Plane bevorzugt über die Seitenwandpaneele und zumindest einen Teil der Stützen ziehen.

Denkbar und von der vorliegenden Erfindung umfasst sein soll jedoch auch die Möglichkeit, die Plane mittels einer Kederschiene festzulegen, welche an dem Winkelprofil angeordnet ist.

Die Verwendung der Plane hat wesentliche Vorteile. Da die zu reinigende Abluft in den Raum eingeblasen wird, bläht sich auch die Plane auf, sodass beispielsweise Regen von ihr abläuft. Auch der Austausch des Materials in dem Raum ist durch die Plane erleichtert, da lediglich die Plane abgenommen, das Material entnommen und dann die Plane wieder auf die Struktur aufgezogen werden muss.

Obwohl die Anordnung mit der Plane insgesamt wie eine Traglufthalle wirkt, kann es sich als notwendig erweisen, zusätzlich eine Mittelstütze vorzusehen.

Die erfindungsgemässe Vorrichtung hat den besonderen Vorteil, dass sie von der Genehmigungsbehörde als ein geschlossenes System betrachtet wird. In diesem geschlossenen System ist es notwendig, nur einen Messpunkt vorzusehen, mit dem die Qualität des gereinigten Gases geprüft wird.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine Seitenansicht einer erfindungsgemässen Vorrichtung zum Filtern von belasteten Gasen;
Figur 2 einen vergrössert dargestellten Schnitt durch die Vorrichtung gemäss Figur 1;
Figur 3 einen nochmals vergrössert dargestellten Schnitt durch eine erfindungsgemässe Stütze in der Vorrichtung gemäss Figur 1;
Figur 4 eine Draufsicht auf die Stütze gemäss Figur 3;
Figur 5 einen vergrössert dargestellten Schnitt durch ein weiteres Ausführungsbeispiel der Vorrichtung gemäss Figur 1;
Figur 6 eine Draufsicht auf die Vorrichtung gemäss Figur 5;
Figur 7 einen nochmals vergrössert dargestellten Schnitt durch eine erfindungsgemässe Stütze in der Vorrichtung gemäss Figur 5;
Figur 8 eine vergrössert dargestellte Draufsicht auf einen Verbindungsbereich zwischen zwei Seitenwandpaneelen;
Figuren 9 und 10 Draufsichten auf zwei weitere Ausführungsbeispiele von Verbindungsmöglichkeiten zwischen zwei Seitenwandpaneelen.

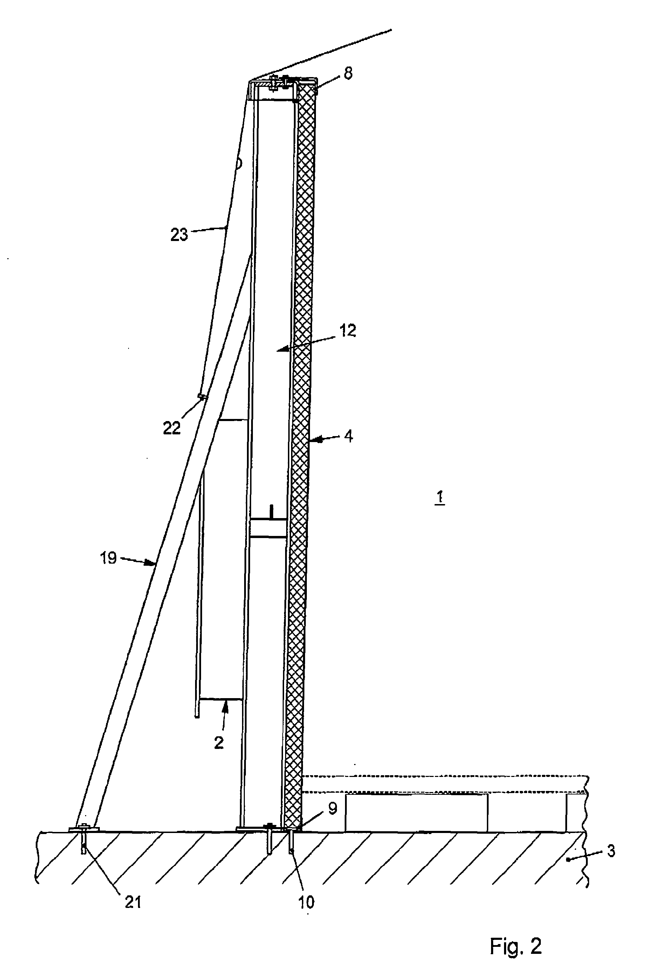

Bei einer erfindungsgemässen Vorrichtung zum Filtern von belasteten Gasen befindet sich in einem Raum 1 (siehe Figur 2) ein nicht näher gezeigtes Biofiltermaterial, durch welches ein zu reinigendes Gas, insbesondere Abluft, hindurchgeführt und gereinigt wird. Zur Zuführung dieses Gases in den Raum 1 ist ein Anschlussstutzen 2 vorgesehen, an den beispielsweise ein entsprechender Zuführschlauch angeschlossen werden kann.

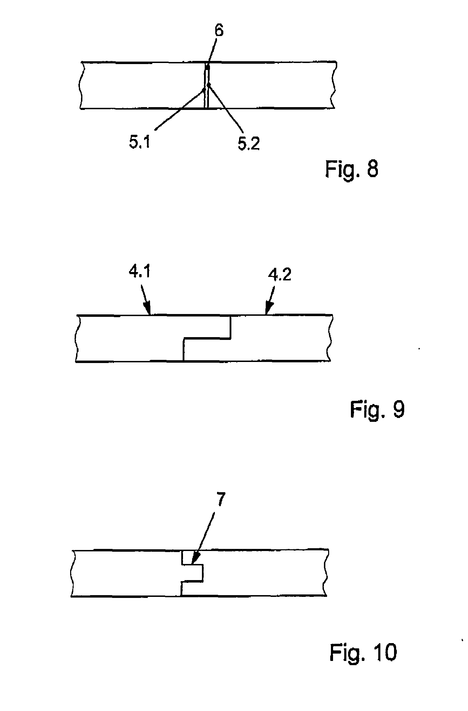

Der Raum 1 wird nach unten von einem Boden 3 begrenzt, der beispielsweise aus einer Bitumenplatte besteht. Seitlich wird der Raum 1 durch Seitenwandpaneele 4 begrenzt, die miteinander verbunden sind. Die Verbindung kann einmal, wie in Figur 8 gezeigt, stumpf erfolgen, wobei dann zwei Seitenkanten 5.1 und 5.2 miteinander verklebt sind. Ein entsprechender Spalt 6 zwischen den beiden Seitenkanten 5.1 und 5.2 kann jedoch beispielsweise mit Silikon verfugt sein.

Bei einer weiteren Möglichkeit der Verbindung gemäss Figur 9 überlappen sich zwei Seitenbereiche von zwei Seitenwandpaneelen 4.1 und 4.2 stufenförmig. Eine weitere Möglichkeit ist in Figur 10 gezeigt, bei welcher zwei Seitenwandpaneele eine Nut-/Federverbindung 7 miteinander eingehen.

Die Seitenwandpaneele können aus einem beliebigen geeigneten Material hergestellt sein. Insbesondere können sie aus Metall oder Kunststoff bestehen. Bevorzugt sind sie allerdings aus mehreren Schichten aufgebaut. Als besonders geeignet hat sich ein Aufbau aus einem Kern aus Hartschaum erwiesen, der bevorzugt beidseits mit einer Metallhaut belegt ist. Dieser Aufbau hat einen sehr geringen Wärmeausdehnungskoeffizienten, sodass es in Gebrauchslage der Vorrichtung bei Temperaturwechseln nicht zur Ausbildung von Spalten zwischen zwei Seitenwandpaneele kommt. Ferner ist ein zusätzlicher Oberflächenschutz für eine aus derartigen Seitenwandpaneelen gebildete Seitenwand nicht notwendig.

Benachbarte Seitenwandpaneele 4 werden durch Halteprofile zusammengehalten. In Figur 2 ist ein oberes Halteprofil 8 und ein unteres Halteprofil 9 gezeigt. Beide Halteprofile 8 und 9 sind U-förmig ausgestaltet, sodass sie eine Aufnahmenut für die Seitenwandpaneele 4 ausbilden. Das untere Halteprofil 9 ist durch ein Befestigungselement 10 auf dem Boden 3 festgelegt.

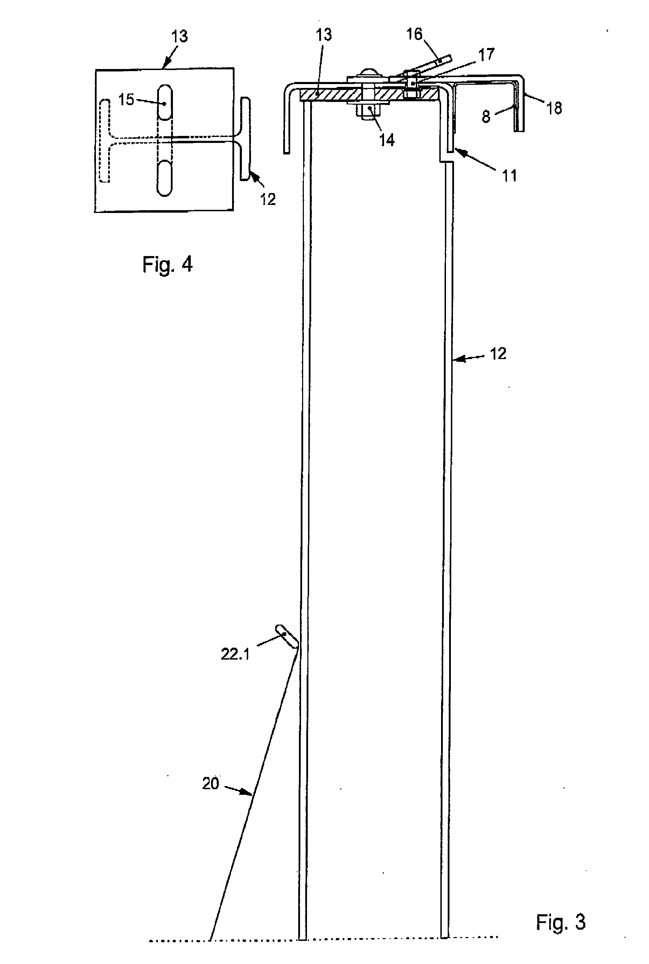

Das obere Halteprofil 8 befindet sich an einem Deckprofil 11, das wiederum eine Stütze 12 übergreift. Die Stütze 12 ist I-förmig ausgestaltet, wie insbesondere in den Figuren 3 und 4 erkennbar. Zur Verbindung mit der Stütze 12 liegt das Deckprofil 11 auf einer Kopfplatte 13 auf, die mit der Stütze 12 verschweisst ist. Die Verbindung zwischen Kopfplatte 13 und Deckprofil 11 geschieht über Befestigungselemente 14, welche entsprechende Langlöcher 15 in der Kopfplatte 13 durchsetzen. Die Kanten des Deckprofils 11 sind im Übrigen gerundet ausgebildet.

Von dem Deckprofil 11 ragt ein Einhängeblech 16 auf, in dessen Nähe ein weiteres Befestigungselement 17 für einen Haltewinkel 18 erkennbar ist, der auch das obere Halteprofil 8 übergreift.

Mit der Stütze 12 ist nach aussen hin eine Stützstrebe 19 verbunden, welche die Stütze 12 zusätzlich gegen den Boden 3 abstützt. Hierzu sitzt die Stützstrebe 19 ebenfalls auf dem Boden 3 mit einer Stützplatte 20 auf und ist mit dem Boden 3 über Befestigungselemente 21 verbunden.

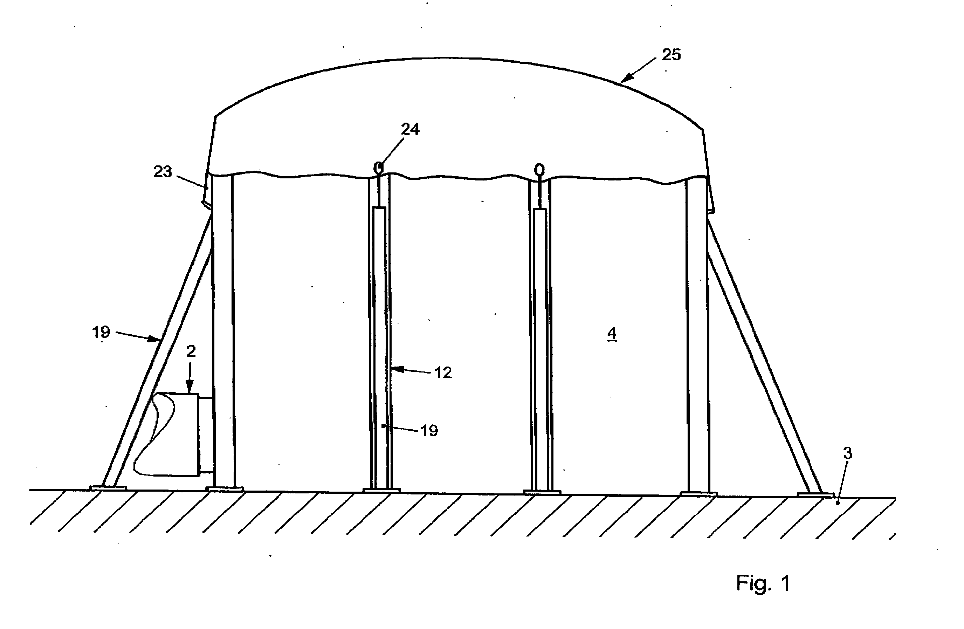

An der Stützstrebe 19 ist ein Kettenglied 22 bzw. 22.1 festgelegt, welches der Halterung eines Spanngurtes 23 dient. Dieser Spanngurt 23 greift, wie in Figur 1 gezeigt, durch eine Öse 24, die in einen Randbereich einer Plane 25 eingesetzt ist. Die Plane 25 wird über die gesamten Seitenwandpaneele 4 und die Stützen 12 gelegt und überdeckt somit das gesamte Biofiltermaterial.

### Die Funktionsweise der vorliegenden Erfindung ist folgende:

Auf einem Boden 3, beispielsweise einer entsprechenden Bitumenplatte, werden die Stützen 12 aufgerichtet und durch die Stützstrebe 19 verstrebt. Auf jede Stütze wird ein Deckprofil 11 aufgelegt und mit diesen der Haltewinkel 18 verbunden. In den Haltewinkel 18 wird, sich gegen das Deckprofil 11 abstützend, das obere Halteprofil 8 eingesetzt. In dieses können nun aufeinanderfolgend die Seitenwandpaneele 4 eingesetzt werden, wobei ihre Verbindung miteinander, wie oben beschriebenen, erfolgt. Nach unten sitzen die Seitenwandpaneele 4 direkt dem Boden 3 auf und können auch diesem gegenüber durch beispielsweise eine Silikonfuge abgedichtet werden.

Wird dagegen für die Seitenwandpaneele 4 auch ein unteres Halteprofil 9 verwendet, so wird dieses zuerst auf dem Boden 3 aufgebracht und festgelegt. Danach werden die Seitenwandpaneele 4 in das untere Halteprofil 9 eingestellt und erst dann das obere Halteprofil 8 auf die Seitenwandpaneele 4 aufgesetzt und an die Stützen 12 angelehnt. Danach erfolgt ein Aufsetzen des Haltewinkels 18 und dessen Festlegung über das Befestigungselement 17 an dem Deckprofil 11.

Nach dem Befüllen des Raumes 1 mit entsprechendem Biofiltermaterial wird der gesamte Raum 1 von der Plane 25 überdeckt und diese mittels den Spanngurten 23 festgezurrt. Jetzt kann das zu reinigende Gas durch den Stutzen 2 in den Raum 1 eingeblasen werden, wobei sich die Plane 25 nach oben aufbläht.

Muss das Filtermaterial ausgetauscht werden, weil es verbraucht ist, wird lediglich die Plane 25 abgenommen, das verbrauchte Filtermaterial dem Raum 1 entnommen und danach die Plane 25 wieder über den Raum 1 gespannt.

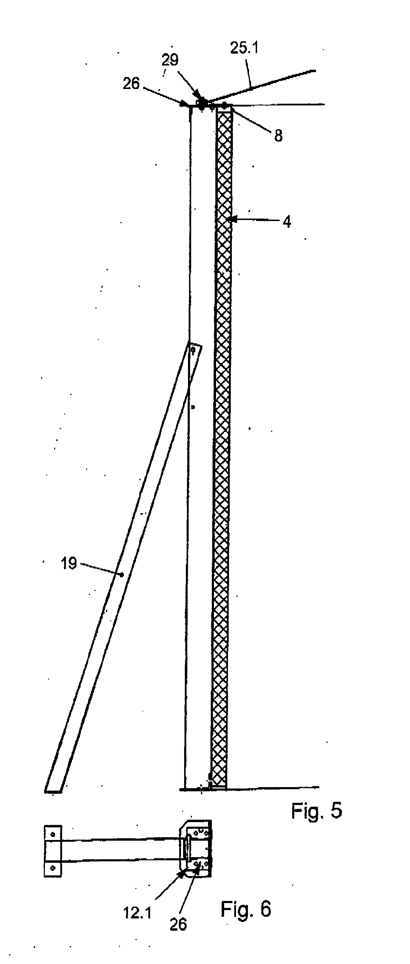

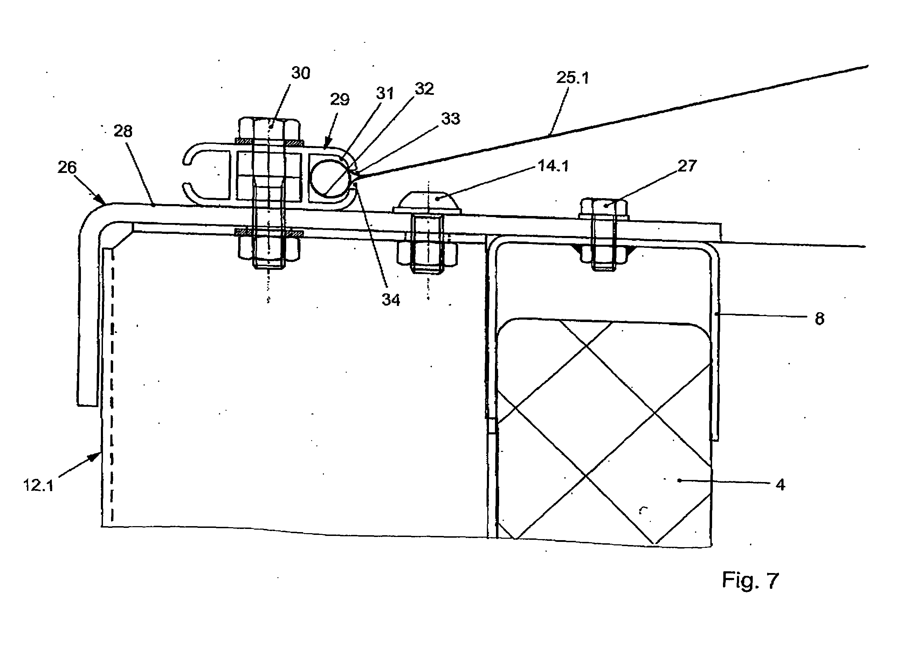

Eine weitere Möglichkeit der Befestigung einer Plane 25.1 ist in den Figuren 5 bis 7, insbesondere in Figur 7 gezeigt. Hier wird ein Winkelprofil 26 mittels der Befestigungselemente 14.1 längs über die Stützen 12.1 befestigt, wobei die Stützen 12.1, wie insbesondere in Figur 6 erkennbar, aus einem U-förmigen Profil hergestellt sind.

Auch das obere Halteprofil 8 ist mittels Befestigungselementen 27 an diesem Winkelprofil 26 angeordnet. Die Kanten des Winkelprofils 26 sind, ähnlich wie die Kanten des Deckprofils 11, gerundet ausgebildet.

Auf einer Oberseite 28 des Winkelprofils 26 ist ferner mittels weiterer Befestigungselemente 30 eine Kederschiene 29 befestigt. Diese Kederschiene 29 nimmt in einer Kederführungskammer 31 einen Keder 32 der Plane 25.1 auf, wobei eine Kederfahne 33 in einem Führungsschlitz 34 der Kederschiene 29 geführt ist.

Die Funktionsweise unterscheidet sich von der oben bereits beschriebenen Funktionsweise lediglich dadurch, dass nach dem Befüllen des Raumes 1 mit entsprechendem Biofiltermaterial der gesamte Raum 1 von der Plane 25.1 überdeckt und in der Kederschiene 29 festgelegt wird. Jetzt kann das zu reinigende Gas durch den Stutzen 2 in den Raum 1 eingeblasen werden, wobei sich die Plane 25.1 nach oben zur einer Kuppel aufbläht.

Um ein Absenken der Plane 25 bzw. 25.1 während eines Ruhezustandes der Vorrichtung unter ein gewünschtes Niveau zu vermeiden, kann zusätzlich eine nicht näher gezeigte Mittelstütze oder dergleichen vorgesehen sein.

**Bezugszeichenliste**

| | | | | | |
|---|---|---|---|---|---|
| 1 | Raum | 34 | Führungsschlitz | 67 | |
| 2 | Anschlussstutzen | 35 | | 68 | |
| 3 | Boden | 36 | | 69 | |
| 4 | Seitenwandpaneele | 37 | | 70 | |
| 5 | Seitenkante | 38 | | 71 | |
| 6 | Spalt | 39 | | 72 | |
| 7 | Nut-/Federverbindung | 40 | | 73 | |
| 8 | oberes Halteprofil | 41 | | 74 | |
| 9 | unteres Halteprofil | 42 | | 75 | |
| 10 | Befestigungselement | 43 | | 76 | |
| 11 | Deckprofil | 44 | | 77 | |
| 12 | Stütze | 45 | | 78 | |
| 13 | Kopfplatte | 46 | | 79 | |
| 14 | Befestigungselement | 47 | | | |
| 15 | Langloch | 48 | | | |
| 16 | Einhängeblech | 49 | | | |
| 17 | Befestigungselement | 50 | | | |
| 18 | Haltewinkel | 51 | | | |
| 19 | Stützstrebe | 52 | | | |
| 20 | Stützplatte | 53 | | | |
| 21 | Befestigungselement | 54 | | | |
| 22 | Kettenglied | 55 | | | |
| 23 | Spanngurt | 56 | | | |
| 24 | Öse | 57 | | | |
| 25 | Plane | 58 | | | |
| 26 | Winkelprofil | 59 | | | |
| 27 | Befestigungselement | 60 | | | |
| 28 | Oberseite | 61 | | | |
| 29 | Kederschiene | 62 | | | |
| 30 | Befestigungselement | 63 | | | |
| 31 | Kederführungskammer | 64 | | | |
| 32 | Keder | 65 | | | |
| 33 | Kederfahne | 66 | | | |

## Patentansprüche

1. Vorrichtung zum Filtern von belasteten Gasen, insbesondere von Abluft, mittels einem Filtermaterial, insbesondere Biofiltermaterial, welches sich in einem Raum (1) mit einem Boden (3) befindet und durch welches das Gas führbar ist,
**dadurch gekennzeichnet,**
**dass** auf den Boden (3) Seitenwandpaneele (4) aufgesetzt und miteinander verbunden sind.

2. Vorrichtung nach Anspruch 1, **dadurch gekennzeichnet, dass** die Seitenwandpaneele (4) aus mehreren Schichten zusammengesetzt sind.

3. Vorrichtung nach Anspruch 2, **dadurch gekennzeichnet, dass** die Seitenwandpaneele (4) doppelwandige Kunststoffpaneele sind und einen Kern aus Hartschaum aufweisen, der zumindest einseitig mit einer Metallhaut belegt ist.

4. Vorrichtung nach einem der Ansprüche 1 bis 3, **dadurch gekennzeichnet, dass** die Seitenwandpaneele (4) stumpf aneinanderstossen und miteinander verschweisst, verklebt oder verfugt sind.

5. Vorrichtung nach einem der Ansprüche 1 bis 3, **dadurch gekennzeichnet, dass** die Seitenwandpaneele (4) eine Nut-/Federverbindung (7) miteinander eingehen.

6. Vorrichtung nach einem der Ansprüche 1 bis 3, **dadurch gekennzeichnet, dass** sich die Seitenwandpaneele (4) in einem Seitenbereich teilweise überlappen.

7. Vorrichtung nach wenigstens einem der Ansprüche 1 bis 6, **dadurch gekennzeichnet, dass** der Boden (3) eine Beton- oder Bitumenplatte ist.

8. Vorrichtung nach wenigstens einem der Ansprüche 1 bis 7, **dadurch gekennzeichnet, dass** die Seitenwandpaneele (4) nach aussen durch Stützen (12, 12.1) und durch zumindest eine Stützstrebe (19) abgestützt sind .

9. Vorrichtung nach Anspruch 8, **dadurch gekennzeichnet, dass** die Stützen (12) I-förmig ausgebildet sind.

10. Vorrichtung nach Anspruch 8, **dadurch gekennzeichnet, dass** die Stützen (12.1) U-förmig ausgebildet sind.

11. Vorrichtung nach wenigstens einem der Ansprüche 1 bis 10, **dadurch gekennzeichnet, dass** zur Halterung der Seitenwandpaneele (4) ein oberes und/oder ein unteres Halteprofil (8, 9) vorgesehen ist, welche U-förmig ausgebildet sind.

12. Vorrichtung nach Anspruch 11, **dadurch gekennzeichnet, dass** zumindest das obere Halteprofil (8) mit den Stützen (12, 12.1) verbunden ist, wobei das obere Halteprofil (8) an einem Deckprofil (11) festliegt, welches auf die Stütze (12) aufgesetzt ist.

13. Vorrichtung nach Anspruch 11 oder 12, **dadurch gekennzeichnet, dass** das untere Halteprofil (9) auf dem Boden (3) festgelegt ist.

14. Vorrichtung nach Anspruch 12 oder 13, **dadurch gekennzeichnet, dass** dem Deckprofil (11) ein Einhängeblech (16) für beispielsweise einen Spanngurt (23) zugeordnet ist und zumindest die Aussenkante des Deckprofils (11) abgerundet ist.

15. Vorrichtung nach wenigstens einem der Ansprüche 11 bis 14, **dadurch gekennzeichnet, dass** das obere Halteprofil (8) an einem Winkelprofil (26) festliegt, welches auf die Stütze (12.1) aufgesetzt ist, wobei zumindest die Aussenkante des Winkelprofils (26) abgerundet ist.

16. Vorrichtung nach Anspruch 15, **dadurch gekennzeichnet, dass** dem Winkelprofil (26) eine Kederschiene (29) zur Aufnahme einer Plane (25.1) zugeordnet ist.

17. Vorrichtung nach wenigstens einem der Ansprüche 1 bis 16, **dadurch gekennzeichnet, dass** die Seitenwandpaneele (4) von einer Plane (25, 25.1) überdeckt sind, welche auch die Deckprofile (11) übergreift.

18. Vorrichtung nach Anspruch 17, **dadurch gekennzeichnet, dass** die Plane (25) über Spanngurte (23) mit einem an der Stütze (12) festliegenden Kettenglied (22) verbunden ist.

19. Vorrichtung nach Anspruch 17, **dadurch gekennzeichnet, dass** die Plane (25.1) zumindest teilweise die Winkelprofile (26) übergreift und mittels eines Keders (32) in einer Kederführungskammer (31) der Kederschiene (29) geführt ist, wobei eine Kederfahne (33) zwischen Keder (32) und Plane (25.1) in einem Führungsschlitz (34) der Kederschiene (29) geführt ist.
